# EUROPEAN PATENT APPLICATION

(11) **EP 1 197 687 A2**
(43) Date of publication of application: **17.04.2002**
(21) Application number: 01124677.4
(22) Date of filing: 09.10.2001
(51) Int. Cl.: F16J 15/06, F16J 15/12, F16J 15/08

(54) **Seal structure for compressor**

(30) Priority: 10.10.2000 JP 2000308862
(71) Applicant: Kabushiki Kaisha Toyota Jidoshokki, Kariya-shi, Aichi-ken (JP)
(72) Inventor: Yokomachi, Naoya, Kariya-shi, Aichi-ken (JP); Imai, Takayuki, Kariya-shi, Aichi-ken (JP); Suzuki, Junya, Kariya-shi, Aichi-ken (JP)
(74) Representative: Leson, Thomas Johannes Alois, Dipl.-Ing.

(57) **Abstract**

A seal structure used in a compressor has a first member (12), a second member (13) and a seal member (31) with a rigidity. The first member (12) has a surface in a first shape (39). The first shape (39) has at least a first contacting portion. The second member (13) has a surface in a second shape (40). The second shape (40) has at least a second contacting portion. The first shape (39) and the second shape (40) are complementary with each other. The seal member (31) has a first seal surface and a second seal surface. The seal member (31) is located between the first contacting portion and the second contacting portion. The seal member (31) has a sufficient area to cover at least the first contacting portion and the second contacting portion. The seal member (31) is press-contacted and correspondingly deformed by the first contacting portion and the second contacting portion, thereby creating a seal between the first member (12) and the second member (13).

## Description

### BACKGROUND OF THE INVENTION

The present invention relates to a seal for a compressor. The compressor has an annular seal member that is placed between an annular portion of a first member and an annular portion of a second member.

The compressor has a plurality of constituent housings in a housing assembly. The constituent housings are secured to each other. An annular seal member is placed between the constituent housings. The seal member prevents refrigerant in the housing assembly from leaking through between the constituent housings. For example, Japanese Unexamined Patent Publication No. 8-261150, No. 9-42156, No. 11-125182 disclose a multiple seal structure. The multiple seal structure has multiple annular seal members. When a plurality of the seal members is used, the seal structure effectively prevents the refrigerant in a housing assembly from leaking through between constituent housings.

In the multiple seal structure, however, due to various diameters of the multiple seal members the housing assembly increases thickness of its wall. As the thickness of the housing assembly increases, a configuration of the compressor becomes larger and heavier.

As refrigerant carbon dioxide requires higher pressure than fluoro series. Carbon dioxide in the high-pressure permeates into a seal member made of rubber. When carbon dioxide decreases its pressure, carbon dioxide inside the seal member expands. This expansion or foaming damages the seal member. For the above reason, the seal member made of rubber is generally unsuitable for a compressor when carbon dioxide is used as refrigerant.

### SUMMARY OF THE INVENTION

The object of the present invention is to offer a single seal member that is placed on an annular portion between a first member and a second member so as to create a seal between the first member and the second member closely.

To achieve the above object, the present invention has following features. A seal structure used in a compressor has a first member, a second member and a seal member with rigidity. The first member has a surface in a first shape. The first shape has at least a first contacting portion. The second member has a surface in a second shape. The second shape has at least a second contacting portion. The first shape and the second shape are complementary with each other. The seal member has a first seal surface and a second seal surface. The seal member is located between the first contacting portion and the second contacting portion. The seal member has a sufficient area to cover at least the first contacting portion and the second contacting portion. The seal member is press-contacted and correspondingly deformed by the first contacting portion and the second contacting portion, thereby creating a seal between the first member and the second member.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a diagram in a cross-sectional view illustrating a first embodiment of a compressor seal according to the present invention;
Fig. 1(a) is a partial enlarged view of Fig. 1 illustrating the first preferred embodiment of the compressor seal according to the present invention;
Fig. 2 is a partial exploded perspective view illustrating the first preferred embodiment of the compressor seal according to the present invention;
Fig. 3(a) is a partial enlarged exploded cross-sectional view illustrating the first preferred embodiment of the compressor seal according to the present invention;
Fig. 3(b) is a partial enlarged cross-sectional view illustrating the first preferred embodiment of the compressor seal according to the present invention;
Fig. 4 is a partial cross-sectional view illustrating a second embodiment of the compressor seal according to the present invention;
Fig. 4(a) is a partial enlarged view of Fig. 4 illustrating the second preferred embodiment of the compressor seal according to the present invention;
Fig. 4(b) is a partial enlarged exploded cross-sectional view illustrating the second preferred embodiment of the compressor seal according to the present invention;
Fig. 5 is a partial enlarged cross-sectional view illustrating a third embodiment of the compressor seal according to the present invention;
Fig. 6 is a partial enlarged cross-sectional view illustrating a fourth embodiment of the compressor seal according to the present invention;
Fig. 7 is a partial cross-sectional view illustrating a fifth embodiment of the compressor seal according to the present invention;
Fig. 7(a) is a partial enlarged exploded cross-sectional view illustrating the fifth preferred embodiment of the compressor seal according to the present invention; and
Fig. 7(b) is a partial enlarged cross-sectional view illustrating the fifth preferred embodiment of the compressor seal according to the present invention.

### DETAILED DESCRIPTION OF THE PREFERRED EMBODIMENTS

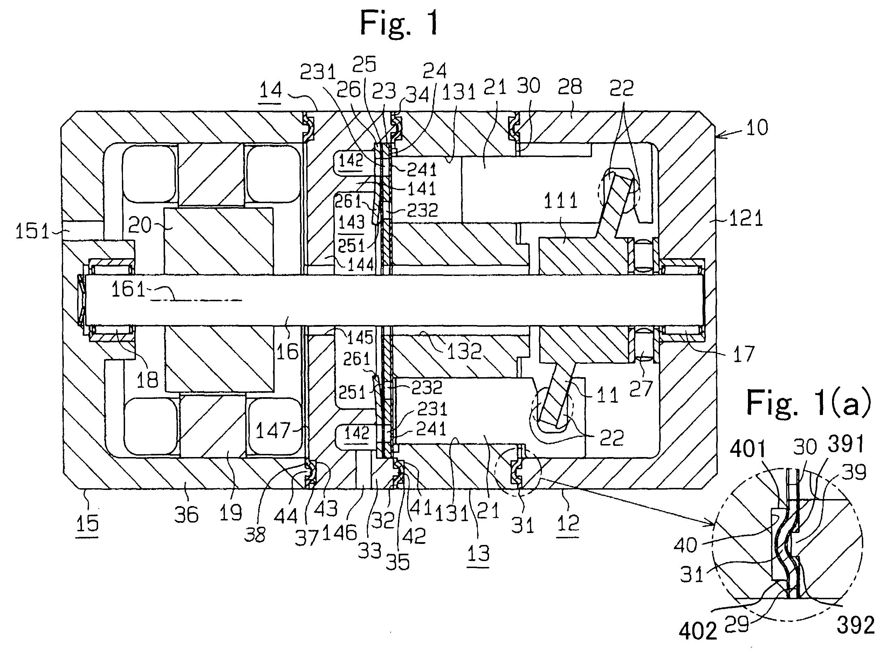

Firstly, a first embodiment of the present invention is described with reference to Figs. 1 through 3. The present invention is applied to a fixed displacement type of a swash plate compressor. In this embodiment, carbon dioxide is used as refrigerant.

As shown in Fig. 1, a swash plate 11 is accommodated in a swash plate housing 12. A cylinder block 13 is secured to the swash plate housing 12. A chamber housing 14 is secured to the cylinder block 13. A motor housing 15 is secured to the chamber housing 14. The swash plate housing 12, the cylinder block 13, the chamber housing 14 and the motor housing 15 constitute a housing assembly 10. The swash plate housing 12, the cylinder block 13, the chamber housing 14 and the motor housing 15 are fixed by securing together by bolts. The bolts are not illustrated in Fig. 1. The swash plate housing 12 and the cylinder block 13 are considered as a first housing and a second housing in the housing assembly 10. Similarly, the cylinder block 13 and the chamber housing 14 are also considered as a first housing and a second housing in the housing assembly 10. The chamber housing 14 and the motor housing 15 are also optionally considered as a first housing and a second housing in the housing assembly 10. Between the above first and second housings, one preferred embodiment of the compressor seal according to the present invention is placed.

A drive shaft 16 is rotatably supported by radial bearings 17 and 18 in the swash plate housing 12 and the motor housing 15. The drive shaft 16 extends through the cylinder block 13 and the chamber housing 14. The swash plate 11 is mounted on the drive shat 16 in the swash plate housing 12.

A stator 19 is fixed to an inner circumferential surface of the motor housing 15. A rotor 20 is mounted on the drive shaft 16 in the motor housing 15. When the stator 19 is energized, the rotor 20 is rotated. The drive shaft 16 rotates integrally with the rotor 20.

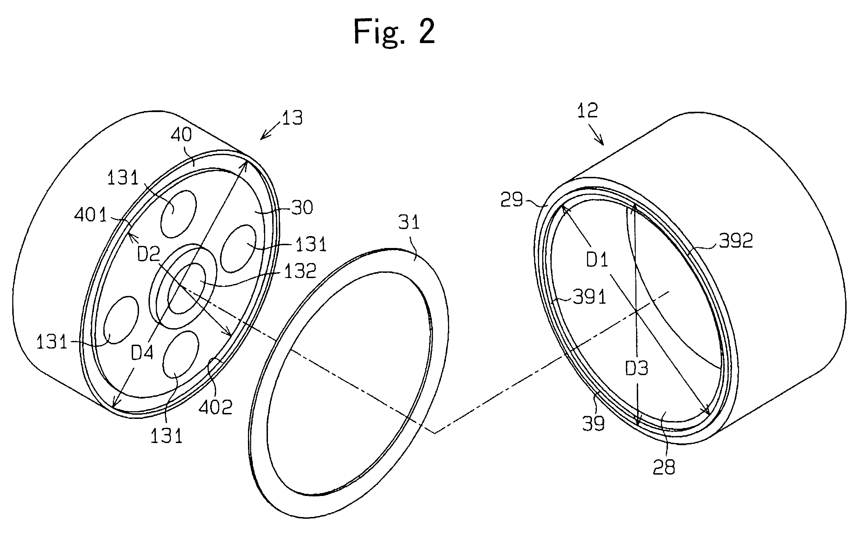

Still referring to Fig. 1, multiple cylinder bores 131 are formed in the cylinder block 13. In the first embodiment, as shown in Fig. 2, four cylinder bores are formed. The multiple cylinder bores 131 are arranged to surround the drive shaft 16 at equal intervals. A piston 21 is accommodated in each of the cylinder bores 131. A pair of shoes 22 is placed between the swash plate 11 and the piston 21. Rotational movement of the swash plate 11 is converted to reciprocal movement of the piston 21 in the cylinder bore 131 through the shoes 22.

A port plate 23, a suction valve plate 24, a discharge valve plate 25 and a retainer plate 26 are placed between the chamber housing 14 and the cylinder block 13. The chamber housing 14 is parted into a suction chamber 142 and a discharge chamber 143 by a partition 141.

A suction port 231 is formed on the retainer plate 26, the discharge valve plate 25 and the port plate 23 to correspond to the suction chamber 142 and each of the cylinder bores 131. A discharge port 232 is formed on the discharge plate 24 and the port plate 23 to correspond to the discharge chamber 143 and each of the cylinder bores 131. A suction valve 241 is formed on the suction valve plate 24 and a discharge valve 251 is formed on the discharge valve plate 25. The suction valve 241 opens and closes the suction port 231, and the discharge valve 251 opens and closes the discharge port 232.

While the piston 21 moves from a left side to a right side in Fig. 1, refrigerant in the suction chamber 142 is drawn into the cylinder bore 131 as the suction valve 241 is pushed away from the suction port 231. While the piston 21 moves from the right side to the left side in Fig. 1, the refrigerant in the cylinder bore 131 is discharged into the discharge chamber 143 as the discharge valve 251 is pushed away from the discharge port 232. A retainer 261 on the retainer plate 26 regulates an opening of the discharge valve 251.

The swash plate 11 has a boss 111. The swash plate housing 12 has an end wall 121. A thrust bearing 27 is placed between the boss 111 and the end wall 121. As the refrigerant is discharged from the cylinder bore 131 into the discharge chamber 143 by the reciprocal movement of the piston 21, compressive reaction force is generated. At this time, the end wall 121 receives the compressive reaction force through the piston 21, the shoes 22, the swash plate 11 and the thrust bearing 27.

The chamber housing 14 has an end wall 144. An axial through hole 145 is formed at the end wall 144 to insert the drive shaft 16. The refrigerant in the discharge chamber 143 flows into the motor housing 15 through the axial through hole 145. A discharge passage 151 is formed in the motor housing 15. The refrigerant in the motor housing 15 flows through the discharge passage 151 into an external refrigerant circuit which is not illustrated in Fig. 1. The external refrigerant circuit has a condenser, an expansion valve and an evaporator. A suction passage 146 is formed in the chamber housing 14. The refrigerant is returned to the suction chamber 142 through the condenser, the expansion valve, the evaporator and the suction passage 146. The motor housing 15 communicates with the discharge chamber 143 through the axial through hole 145 and maintains discharge pressure. The swash plate housing 12 communicates with the discharge chamber 143 through the axial through hole 132 formed in the cylinder block 13 and also maintains discharge pressure. The radial bearings 17 and 18, the thrust bearing 27 as well as sliding portions between the swash plate 11 and the shoes 22 are all lubricated by lubricant oil which flows in carbon dioxide in the first embodiment.

As shown in Fig. 1 (a), the swash plate housing 12 is a first member and the cylinder block 13 is a second member. An annular gasket 31 as a seal member is placed between an end surface 29 of a circumferential wall 28 of the swash plate housing 12 and an outer circumferential portion of an end surface 30 of the cylinder block 13. The first member, the second member and the seal member have a closed shape surface such as an annular surface. The end surfaces 29 and 30 are respectively annular securing portions of the swash plate housing 12 and the cylinder block 13.

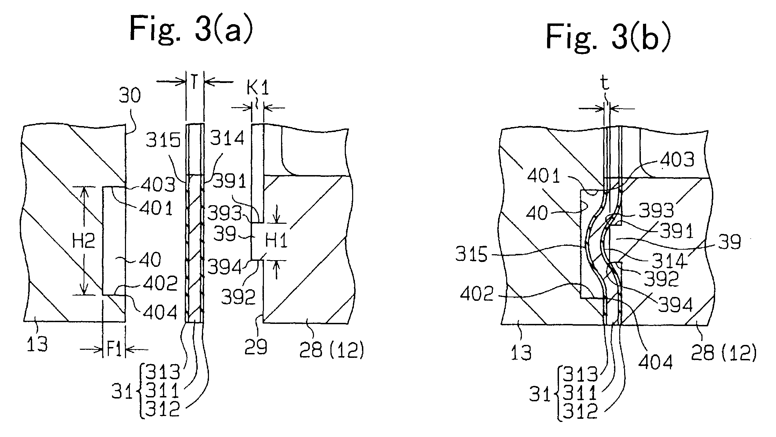

As shown in Figs. 3(a) and 3(b), an annular protrusion 39 in a substantially rectangular or square shape is formed on the end surface 29, and an annular recess 40 in a substantially rectangular or square shape is formed on the outer circumferential portion in one preferred embodiment. The annular protrusion 39 and the annular recess 40 are complementary with each other. Height K1 of the annular protrusion 39 is smaller than thickness T of the gasket 31. Depth F1 of the annular recess 40 is larger than the height K1 of the annular protrusion 39. A width H2 of the annular recess 40 is larger than a width H1 of the annular protrusion 39.

As shown in Fig. 2, a diameter D1 of an inner circumferential step 391 of the annular protrusion 39 is larger than a diameter D2 of an inner circumferential step 401 of the annular recess 40 in one preferred embodiment. A diameter D3 of an outer circumferential step 392 of the annular protrusion 39 is smaller than a diameter D4 of an outer circumferential step 402 of the annular recess 40.

Now referring back to Figs. 1 and 1(a), as the compressor is seen in a cross-sectional view along a direction of an axis 161 of the drive shaft 16, the step 391 of the protrusion 39 is positioned further away from the drive shaft 16 than the step 401. In the same way, the step 402 of the annular recess 40 is positioned further away from the drive shaft 16 than the step 392 to surround the step 392 with respect to the drive shaft 16. When the compressor is seen in a cross-sectional view along the direction of the axis 161 of the drive shaft 16, the annular protrusion 39 is received in the annular recess 40.

As shown in Fig. 3(a) and 3(b) and in combination with Fig. 2, the annular protrusion 39 has an inner protruding edge 393 and an outer protruding edge 394 with respect to the axis 161 which is shown in Fig. 1. The annular recess 40 forms an inner base edge 403 and an outer base edge 404 with respect to the axis 161. A diameter of the inner protruding edge 393 or the diameter D1 of the step 391 is larger than a diameter of the inner base edge 403 or the diameter D2 of the step 401. A diameter of an outer protruding edge 394 or the diameter D3 of the step 392 is smaller than a diameter of an outer base edge 404 or the diameter D4 of the step 402.

Fig. 3(a) illustrates a state before the swash plate housing 12 and the cylinder block 13 are assembled. The gasket 31 includes a base plate 311 and seal layers 312, 313 which are fixed to both surfaces of the base plate 311. The base plate 311 is made of metal while the seal layers 312 and 313 are made of rubber. The gasket 31 is flat.

In Fig. 3(b), the swash plate housing 12 and the cylinder block 13 are assembled to sandwich the gasket 31. Herein, the gasket 31 is sandwiched and deformed by the annular protrusion 39 and the annular recess 40.

Still referring to Fig. 3(a) and 3(b), the gasket 31 has a first seal surface 314 and a second seal surface 315. The protruding edges 393 and 394 are contacting portions of the first seal surface 314. The base edges 403 and 404 are contacting portions of the second seal surface 315. The inner protruding edge 393 is a first contacting portion that corresponds to the inner base edge 403. The inner base edge 403 is a second contacting portion that corresponds to the inner protruding edge 393. In the same way, the outer protruding edge 394 is a first contacting portion that corresponds to the outer base edge 404. The outer base edge 404 is a second contacting portion that corresponds to the outer protruding edge 394.

Referring to Fig. 1, between an outer circumferential portion of an end surface 32 of the cylinder block 13 and an end surface 34 of a circumferential wall 33 of the chamber housing 14, an annular gasket 35 is placed. Between an outer circumferential portion of an outer end surface 147 of the end wall 144 of the chamber housing 14 and an end surface 37 of a circumferential wall 36 of the motor housing 15, an annular gasket 38 is placed. In a preferred embodiment, the gaskets 35 and 38 are substantially similar to the gasket 31 and are placed in a substantially similar manner.

The end surfaces 32 and 34 are respectively annular securing portions of the cylinder block 13 and the chamber housing 14. The end surface 37 and the outer end surface 147 are respectively annular securing portions of the chamber housing 14 and the motor housing 15.

Still referring to Fig. 1, an annular recess 41 is formed on the outer circumferential portion of the end surface 32 of the cylinder block 13. An annular protrusion 42 is formed on the end surface 34 of the circumferential wall 33 of the chamber housing 14. The annular protrusion 41 and the annular recess 42 are complementary with each other. An annular recess 43 is formed on the outer circumferential portion of the outer end surface 147 of the chamber housing 14. An annular protrusion 44 is formed on the end surface 37 of the circumferential wall 36 of the motor housing 15. The annular protrusion 43 and the annular recess 44 are complementary with each other. The annular protrusions 42 and 44 are in a substantially similar shape as the annular protrusion 39. The annular recesses 41 and 43 are also in a substantially similar shape as the annular recess 40. As the compressor is seen in a cross-sectional view along the direction of the axis 161 of the drive shaft 16, the annular protrusion 42 is received in the annular recess 41 while the annular protrusion 44 is received in the annular recess 43.

In the first embodiment, the following effects are obtained.

As shown in Fig. 3(b), when the swash plate housing 12 and the cylinder block 13 are assembled, the end surface 29 and the end surface 30 approach with each other to have a distance which is nearly equal to the thickness T of the gasket 31. The height K1 of the annular protrusion 39 is smaller than the thickness T of the gasket 31 in one preferred embodiment. Therefore, the protruding edges 393, 394 and the base edges 403, 404 approach with each other to have intervals t which are smaller than the thickness T of the gasket 31. Accordingly, as shown in Figs. 3(a) and 3(b), the protruding edges 393 and 394 contact the first seal surface 314 of the seal layer 312. In the same way, the base edges 403 and 404 contact the second seal surface 315 of the seal layer 313. In the above assembled state, the inner protruding edge 393 pushes the gasket 31 towards the end surface 30 outside the inner base edge 403 with respect to the axis 161 which is shown in Fig. 1, while the inner base edge 403 pushes the gasket 31 towards the end surface 29 inside the inner protruding edge 393 with respect to the axis 161. In a substantially similar manner, the outer protruding edge 394 pushes the gasket 31 towards the end surface 30 inside the outer base edge 404 with respect to the axis 161, while the outer base edge 404 pushes the gasket 31 towards the end surface 29 outside the outer protruding edge 394 with respect to the axis 161.

As a result, as shown in Fig. 3(b), the annular gasket 31 is deformed in a direction of the thickness of the annular gasket 31 or in a direction of the annular protrusion. The deformation is made over all circumferences of the annular gasket 31. The annular gasket 31 is deformed against rigidity of the base plate 311 over all circumferences of the annular gasket 31. At this time, the protruding edges 393, 394 press-contact the seal layer 312 and the base edges 403, 404 press-contact the seal layer 313. The protruding ends 393, 394 and the base ends 403, 404 are linear contacting portions and increase pressure against the seal layers 312 and 313 when press-contacted. Such high-pressure prevents refrigerant in the housing assembly 10 from leaking through between the gasket 31 and the end surface 29 as well as between the gasket 31 and the end surface 30.

Carbon dioxide is used in higher pressure than fluoro series. Carbon dioxide in the high-pressure permeates into a seal member made of rubber. When carbon dioxide decreases its pressure, carbon dioxide in the seal member expands to damage the seal member. This damage deteriorates function of the seal member.

The gasket 31 is formed by affixing the seal layers 312 and 313 made of rubber to both surfaces of the base plate 311. As thickness of the seal layers 312 and 313 is decreased, little carbon dioxide in high-pressure permeates into the seal layers 312 and 313. For the above reason, foaming is substantially reduced. Accordingly, the seal layers 312 and 313 are not damaged.

When the annular protrusion 39 and the annular recess 40 are employed, contacting portions increase pressure against the seal layers 312 and 313. The above contacting portions are easily formed.

The gasket 31 is flat. Therefore, both surfaces of the gasket 31 correspond to contact the end surface 29 or the end surface 30. In other words, the seal layer 312 contacts the end surface 29 while the seal layer 312 contacts the end surface 30. The seal layer 313 contacts the end surface 29 while the seal layer 313 contacts the end surface 30. Accordingly, the gasket 31 is convenient to use.

The annular gasket 31 has thickness that is much smaller than a diameter of the annular gasket 31 and is easily deformed equally over all circumferences of the annular gasket 31.

The annular gaskets 35 and 38 function in substantially the same way as the annular gasket 31. The annular protrusions 42 and 44 function in substantially the same way as the annular protrusion 39. The annular recesses 41 and 43 function in substantially the same way as the annular recess 40.

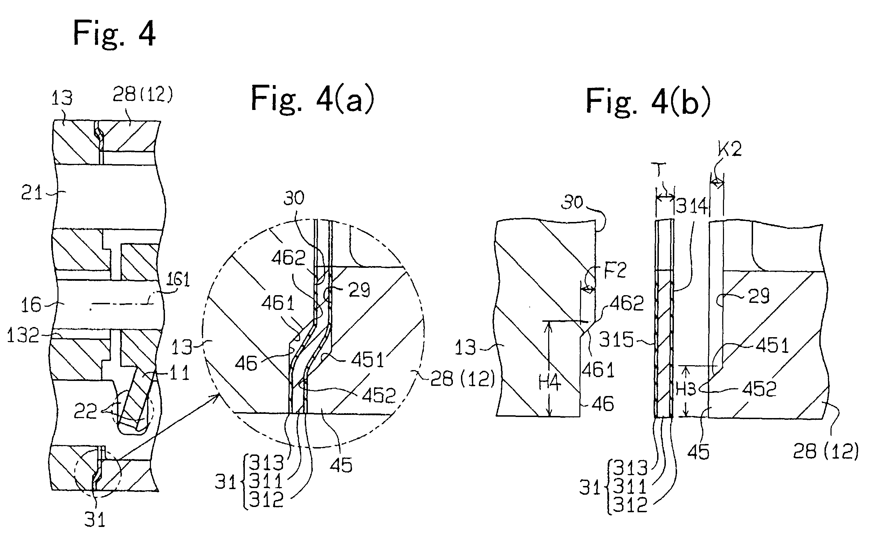

A second preferred embodiment of the present invention will be described with reference to Figs. 4, 4(a) and 4(b). The same reference numerals of the first preferred embodiment are applied to substantially the same components in the second preferred embodiment.

An annular protrusion 45 is formed on the end surface 29 of the circumferential wall 28 of the swash plate housing 12. An annular indentation 46 is formed on the outer circumferential portion of the end surface 30 of the cylinder block 13. The annular protrusion 45 has a protrusion with a single step on the end surface 29 which is a securing portion. The indentation 46 forms a recess with a single step on the outer circumferential portion which is a securing portion. The annular protrusion 45 and the annular indentation 46 are complementary with each other. Height K2 of the annular protrusion 45 is smaller than the thickness T of the gasket 31. Depth F2 of the annular indentation 46 is substantially equal to the height K2 of the annular protrusion 45. A width H4 of the annular indentation 46 is larger than a width H3 of the annular protrusion 45. A diameter of the step 451 of the annular protrusion 45 is larger than a diameter of the step 461 of the annular indentation 46. When the compressor is seen in a cross-sectional view along the direction of the axis 161 of the drive shaft 16, the step 451 of the annular protrusion 45 is positioned further away from the drive shaft 16 than the step 461 of the annular indentation 46. When the compressor is seen in a cross-sectional view along the direction of the axis 161 of the drive shaft 16, the annular protrusion 45 is received by the annular indentation 46.

As shown in Fig. 4(a), when the swash plate housing 12 and the cylinder block 13 are assembled, the annular gasket 31 is deformed. In this state, the protruding edge 452 of the step 451 of the annular protrusion 45 press-contacts the seal layer 312 and the base edges 462 of the step 461 of the annular indentation 46 press-contacts the seal layer 313. The protruding edge 452 and the base edge 462 are linear contacting portions and increase pressure against the seal layers 312 and 313 when press-contacted. Such high-pressure prevents the refrigerant in the housing assembly 10 from leaking through between the annular gasket 31 and the end surface 29 as well as between the annular gasket 31 and the end surface 30.

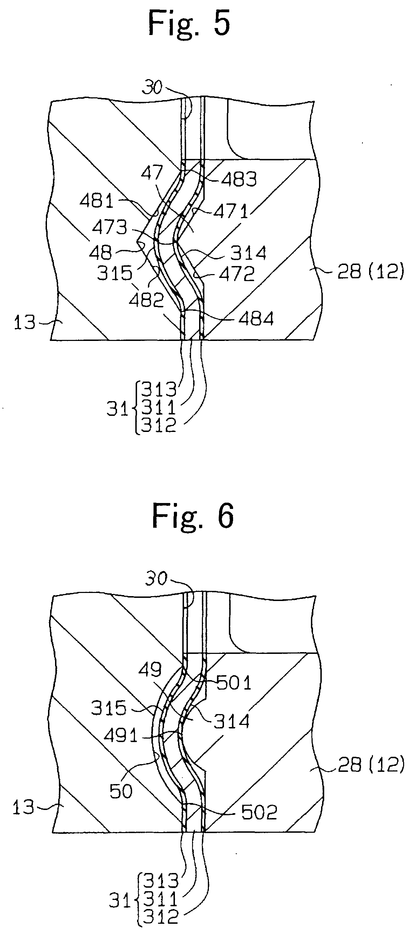

A third preferred embodiment of the present invention will be described with reference to Figs. 5. The same reference numerals of the first preferred embodiment are applied to substantially the same components of the third preferred embodiment.

An annular protrusion 47 has a triangular shape with a pair of tapers 471 and 472. The tapers 471 and 472 cross on a top 473 of the annular protrusion 47 which is a first contacting portion and press-contact the seal layer 312 of the annular gasket 31. An annular recess 48 has a pair of tapers 481 and 482. The tapers 481 and 482 respectively cross the end surface 30 on a pair of edge portions 483 and 484, which are second contacting portions and press-contact the seal layer 313 of the annular gasket 31. The annular protrusion 47 and the annular recess 48 are complementary with each other.

A fourth preferred embodiment of the present invention will be described with reference to Fig. 6. The same reference numerals of the first preferred embodiment are applied to substantially the same components of the fourth preferred embodiment.

An annular protrusion 49 has a convex or a semicircular shape in a radial cross section. An annular recess 50 forms a concave or a semicircular shape in the radial cross section. The annular protrusion 49 and the annular recess 50 are complementary with each other. A top 491 of the annular protrusion 49 is a first contacting portion and press-contacts the seal layer 312 of the annular gasket 31. A partial circle of the annular recess 50 is formed on the end surface 30 between a pair of edge portions 501 and 502, which are second contacting portions and press-contact the seal layer 313 of the annular gasket 31.

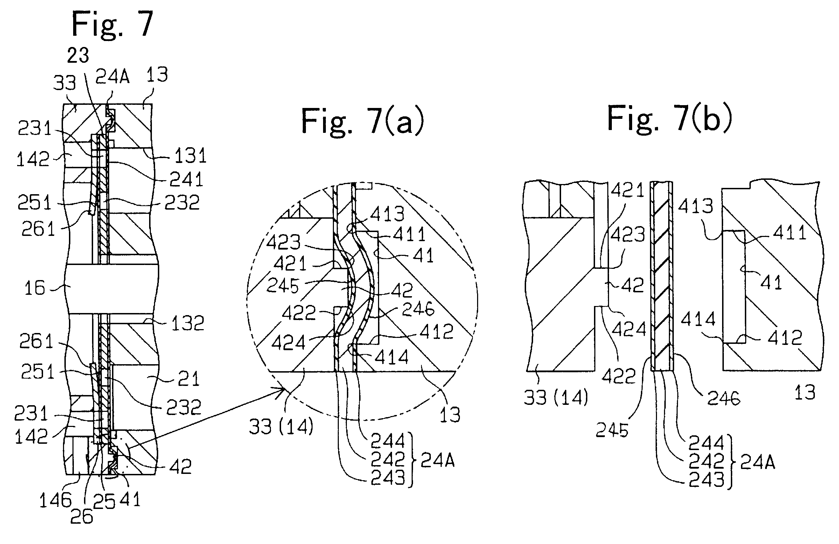

A fifth preferred embodiment of the present invention will be described with reference to Figs.7, 7(a), 7(b). The same reference numerals of the first preferred embodiment are applied to substantially the same components of the fifth preferred embodiment.

The suction valve 241 is formed on a suction valve plate 24A. The suction valve plate 24A is also a gasket. The gasket 24A includes a base plate 242 and seal layers 243, 244 which are fixed to both surfaces of the base plate 242. The base plate 242 is made of metal while the seal layers 243, 244 are made of rubber. The annular recess 41 is formed on the cylinder block 13. The annular recess 41 forms an inner base edge 413 with an inner step 411 and an outer base edge 414 with an outer step 412 with respect to the axis 161 which is shown in Fig. 1. The base edges 413, 414 are second contacting portions which contact a second seal surface 246 of the suction valve plate 24A. The annular protrusion 42 is formed on the chamber housing 14. The annular protrusion has an inner protruding edge 423 with an inner step 421 and an outer protruding edge 424 with an outer step 422 with respect to the axis 161. The protruding edges 423, 424 are first contacting portions which contact a first seal surface 245 of the suction valve plate 24A. The suction valve plate 24A is flat. When the cylinder block 13 and the chamber housing 14 are assembled, an outer circumferential portion of the suction valve plate 24A is deformed over all circumferences of the annular gasket 31. In the above described preferred embodiment, since the suction valve plate 24A is also used as a gasket, the number of parts is reduced.

In the present invention, the following alternative embodiments are also practiced.

The present invention is applied to a variable displacement compressor which is disclosed in Japanese Unexamined Patent Publication No. 2000-170656. The variable displacement compressor has a control valve housing and a compressor housing. The present invention is applied to a seal between the control valve housing and the compressor housing using a gasket. In an alternative embodiment, the control valve housing is a first member and the compressor housing is a second member. The control valve housing and the compressor housing are secured to each other.

The present invention is not applied only to a swash plate type compressor, but also to a scroll type compressor, a vane type compressor and other types of compressors.

As described above, in the present invention, a seal structure used in a compressor has a first member, a second member and a seal member with rigidity. The first member has a surface in a first shape. The first shape has at least a first contacting portion. The second member has a surface in a second shape. The second shape has at least a second contacting portion. The first shape and the second shape are complementary with each other. The seal member has a first seal surface and a second seal surface. The seal member is located between the first contacting portion and the second contacting portion. The seal member has a sufficient area to cover at least the first contacting portion and the second contacting portion. The seal member is press-contacted and correspondingly deformed by the first contacting portion and the second contacting portion, thereby creating a seal between the first member and the second member. Accordingly, the single seal member is placed between an annular portion of the first member and a corresponding annular portion of the second member to closely seal the first member and the second member.

The present examples and embodiments are to be considered as illustrative and not restrictive and the invention is not to be limited to the details given herein but may be modified within the scope of the appended claims.

A seal structure used in a compressor has a first member, a second member and a seal member with a rigidity. The first member has a surface in a first shape. The first shape has at least a first contacting portion. The second member has a surface in a second shape. The second shape has at least a second contacting portion. The first shape and the second shape are complementary with each other. The seal member has a first seal surface and a second seal surface. The seal member is located between the first contacting portion and the second contacting portion. The seal member has a sufficient area to cover at least the first contacting portion and the second contacting portion. The seal member is press-contacted and correspondingly deformed by the first contacting portion and the second contacting portion, thereby creating a seal between the first member and the second member.

## Claims

1. A seal structure used in a compressor comprising:
a first member having a surface in a first shape having at least a first contacting portion;
a second member having a surface in a second shape having at least a second contacting portion, the first shape and the second shape being complementary with each other; and
a seal member with a rigidity having a first seal surface and a second seal surface, said seal member being located between said first contacting portion and said second contacting portion, said seal member having a sufficient area to cover at least the first contacting portion and the second contacting portion, said seal member being press-contacted and correspondingly deformed by the first contacting portion and the second contacting portion, thereby creating a seal between the first member and the second member.

2. The seal structure according to claim 1 wherein the first shape is a protrusion and the second shape is a recess to receive the protrusion.

3. The seal structure according to claim 2 wherein the protrusion and the recess are square.

4. The seal structure according to claim 2 wherein the protrusion and the recess are triangular.

5. The seal structure according to claim 2 wherein the protrusion and the recess are circular.

6. The seal structure according to claim 1 wherein the first shape is a protrusion, and wherein the second shape is an indentation to receive the protrusion.

7. The seal structure according to claim 2 wherein thickness of said seal member is larger than height of the protrusion.

8. The seal structure according to claim 6 wherein thickness of said seal member is larger than height of the protrusion, the height of the protrusion being substantially equal to depth of the indentation.

9. The seal structure according to claim 1 wherein said first member and said second member are respectively a swash plate housing and a cylinder block.

10. The seal structure according to claim 1 wherein said seal member has a rigid base plate and rubber seal layers on the rigid base plate.

11. The seal structure according to claim 1 wherein said seal member is flat.

12. The seal structure according to claim 1 wherein said seal member is a valve plate.

13. The seal structure according to claim 1 wherein the first contacting portion, the second contacting portion and said seal member are formed in a closed shape.

14. A seal structure used in a compressor comprising:
a first member having an annular first contacting portion;
a second member having an annular second contacting portion; and
an annular seal member with a predetermined range of rigidity having a first seal surface for contacting the first contacting portion and a second seal surface for contacting the second contacting portion, wherein said annular seal member is press-contacted and deformed by the first contacting portion and the second contacting portion, whereby said annular seal member creates a seal between said first member and said second member.

15. The seal structure according to claim 14 wherein the first contacting portion is an edge of a protrusion and the second contacting portion is an edge of a recess.

16. The seal structure according to claim 15 wherein the protrusion is in a square shape and the recess is in a square shape to receive the protrusion.

17. The seal structure according to claim 15 wherein the protrusion is in a triangular shape and the recess is in a triangular shape to receive the protrusion.

18. The seal structure according to claim 15 wherein the protrusion is in a circular shape and the recess is in a circular shape to receive the protrusion.

19. The seal structure according to claim 15 wherein the recess is in an indent shape to receive the protrusion.
